# EUROPEAN PATENT SPECIFICATION

(11) **EP 1 585 181 B1**
(45) Date of publication and mention of the grant of the patent: **02.06.2010**
(21) Application number: 05075171.8
(22) Date of filing: 24.01.2005
(51) Int. Cl.: H01M 2/10

(54) **Fire shielding battery case**
Feuergeschütztes Batteriegehäuse
Boîtier de batterie inflammable

(30) Priority: 04.02.2004 US 771972
(43) Date of publication of application: 12.10.2005
(73) Proprietor: EnerDel, Inc., Indianapolis, IN 46256 (US)
(72) Inventor: Abu-Isa, Ismat Ali, Rochester Hills, MI 48309 (US); Waters, John Eugene, Fortville, IN 46040 (US)
(74) Representative: McDonough, Jonathan

(56) References cited:
- EP-A- 0 739 049
- RU-C1- 2 129 322
- US-A1- 2002 077 417
- PATENT ABSTRACTS OF JAPAN vol. 1997, no. 07, 31 July 1997 (1997-07-31) -& JP 09 082293 A (ASAHI CHEM IND CO LTD), 28 March 1997 (1997-03-28)

## Description

### TECHNICAL FIELD

This invention relates to a battery case made with an intumescent flame retardant polymeric material.

### BACKGROUND OF THE INVENTION

Intumescent materials contain ingredients that decompose on severe heating to generate gases and form an incombustible or low combustible residue. The expelled gases expand the residue to form a foam layer with improved thermal insulation properties. Materials also having a low heat release rate arc advantageous in that once they are exposed to fire they release less heat to neighboring materials and diminish fire propagation. Low heat release polymers can be used wherever there are fire safety concerns. The polymers can be used for automotive applications, such as for a fire shield for fuel tanks, car floors, bulk heads, wheel well covers or in other places in cars, trucks, boats, or airplanes to provide resistance to ignition or resistance to flame travel from the fire source to other areas. Applications in residential or commercial structures could help fire containment within each structure as well as slowing down the spread of fire from one structure to a neighboring structure. Hence, fire containment is more easily accomplished when flammable substrates are substituted with low heat release fire retardant polymers.

Standards for fire resistant plastics include requirements that the material should have low heat release rate and low flame spread rate. By way of example, polyethylene melts, drips and bums at a relatively fast rate when exposed to fire. On the other hand, polyethylene is strong and durable, and has a low cost, high impact resistance and high chemical resistance. Thus, flame retardant systems have been developed for use with plastics, such as polyethylene, that attempt to provide intumescence, low heat release rate and low flame spread rate without decreasing the strength, durability, and impact and chemical resistance of the plastic to unacceptable levels for particular applications.

Invariably, however, some loss in the physical properties of the polymeric material is experienced upon addition of inorganic flame retardant materials to the polymer matrix.

The flame retardant materials must therefore provide a desired balance between physical properties, such as impact strength, tensile strength, elongation, and elasticity, and flame retardant properties, such as flame spread control, melt dripping, smoke, peak and average heat release rate, and total heat release. By way of example, U.S. Patent No. 5,834,535 entitled "Moldable Intumescent Polyethylene and Chlorinated Polyethylene Compositions", and U.S. Patent No. 6,184,269 entitled "Moldable Intumescent Materials Containing Novel Silicone Elastomers" describe flame retardant plastic systems that address the need for achieving improved resistance to fire in desirable plastics without an unacceptable decrease in physical properties. However, the materials described therein contain a halogen material, namely, chlorinated polyethylene, which may generate corrosive HX gases, such as HCl. These toxic by-products are dangerous to persons exposed thereto. Many similar efforts to develop flame retardant systems utilize halogenated components because halogens are very efficient fire retardants. However, because they are environmentally unfriendly, it is desirable to find alternative fire retardant systems that do not use halogens.

Another recent development is described in copending, commonly owned U.S. Application No. 10/323,497 entitled "Intumescent Fire Retardant Polymeric Composition," wherein an intumescent thermoplastic elastomer forms one layer of a multilayer construction for a fuel tank.

In addition to the applications described above, there is a need for intumescent fire resistant polymeric materials that will act as a fire shield when used for battery cases and internal battery components. Under unusual and abusive circumstances, fire "incidents" can occur during use of batteries, for example, lithium batteries.

Thus, there is a need to formulate a polymeric material, and advantageously, a non-halogen polymeric material, that is strong and durable, that has a low cost, high impact resistance and high chemical resistance, that bums at a slow rate, that does not melt, drip and flow, that releases heat at a relatively low rate when exposed to fire, and that acts as a fire shield in batteries.

The prior art in this area includes US 2002/0077417 which provides a flame retardant polycarbonate resin composition comprising a polycarbonate resin and a composite rubbery graft copolymer; JP 09082293 which provides a battery case formed of a polyphenylene ether resin composition, containing a phosphoric ester compound; and RU 2129322 which provides an alkaline battery for a vehicle having a container made of a fire and alkaline proof compound that has in its composition butadiene-acrylonitrile-styrene copolymer and polycarbonate together with a fire proofing compound.

### SUMMARY OF THE INVENTION

According to a first aspect of the invention we provide a battery case comprising:
a base portion having a bottom and side walls forming an interior compartment for holding a battery cell and internal structural components; and
a cover portion engaging the side walls for enclosing the compartment; and
characterised in that the fire resistant additive comprises, on the basis of 100 parts by weight blended mixture:
20-45 parts of a polymeric binder, the polymeric binder comprising:
high density polyethylene having a density in the range of 0.940-0.970 g/cm3; and
an α-olefin-containing copolymer having a density less than the density of the high density polyethylene,

5-25 parts of a nitrogenous gas-generating agent selected from the group consisting of amines, ureas, guanidines, guanarnines, s-triazines, amino acids, salts thereof, and mixtures thereof, wherein the salts are selected from the group consisting of phosphates, phosphonates, phosphinates, borates, cyanurates, sulfates and mixtures thereof;
10-35 parts of a water vapour-generating agent;
1-5 parts of an antioxidant; and
0-15 parts of a reinforcing agent,
³³wherein the flame retardant polymeric composition is halogen free.

In one embodiment of the present invention, one or more vent holes are provided in the battery case, advantageously in the cover portion, to permit gases that arc generated during a thermal incident to escape from the battery compartment to thereby reduce pressure build-ups.

In another embodiment of the present invention, an intumescent flame retardant polymeric composition is used to make one or more internal structural components to quench fires within the battery case.

The intumescent fire resistant additive used for the battery case of the present invention comprises, on the basis of 100 parts by weight blended mixture, 20-45 parts of a polymeric binder including an α-olefin-containing copolymer, such as linear low density polyethylene copolymer, and a high density polyethylene having a density in the range of 0.940-0.970 g/cm3; 5-25 parts of a nitrogenous gas-generating agent; 10-35 parts of a water vapour-generating agent; 1-5 parts of an antioxidant; and 0-15 parts of a reinforcing agent. The flame retardants composition is essentially halogen-free. The base polymer comprise a polyphenylene oxide and polypropylene blend, unfilled or filled with up to 60 wt.% glass fiber, and advantageously filled with 20-45 wt.% glass fiber.

### BRIEF DESCRIPTION OF THE DRAWINGS

The present invention will now be described, by way of example, with reference to the accompanying drawings, in which:
FIG. 1 is a perspective view of a battery case of the present invention.
FIG. 2 is an exploded view of a battery case of the present invention, depicting the base portion, the cover portion, and an internal structural component.
FIG. 3 is a partially cut-away perspective view depicting an interior compartment and internal structural component of a battery case of the present invention.
FIG. 4 is a perspective view of an apparatus for measuring the efficiency of an intumescent flame retardant polymeric composition, according to the present invention.
FIG. 5 is a graph depicting the peak heat release rate, the average heat release rate, and the total heat released for various concentrations of the intumescent fire retardant system of the present invention.

### DETAILED DESCRIPTION

In one embodiment, the present invention provides a battery case having base and cover portions and optionally internal structural components made of an intumescent flame retardant polymeric composition that includes a base polymer and a fire resistant additive to produce a moldable material with good physical properties that bums at a slow rate, has a low heat release rate, and has intumescence to provide fire and heat shielding. Flame retardant materials may be used for the battery case and for internal structural components, such as support plates, terminal edge protectors and terminal covers. In one embodiment of the present invention, the fire resistant additive does not contain halogens, and is therefore an environmentally safer system than fire retardants that rely on halogenated components for their efficiency. The present invention further provides intumescent flame retardant polymeric compositions that are thermoplastic molding compositions that can be blow molded, injection molded, compression molded or otherwise suitably molded and shaped to a desired geometry or configuration for a battery component by thermal processes. The flame retardant polymeric materials for the battery case of the present invention will act as a fire shield, and when exposed to intense fire, will not melt and drip, and will not bum through even after prolonged flame exposure. When used for the lithium battery case, the polymeric materials of the present invention will reduce, and possibly prevent, a thermal incident caused by abusive overcharging. The intumescent flame retardant case will contain the fire within the walls of the battery. The fire shielding material contains ingredients to quench fire in the gaseous phase and to maintain the integrity of the battery case during fire. Because the polymeric material of the present invention will act as a true fire shield, it will not allow fire to go through and spread to neighboring objects.

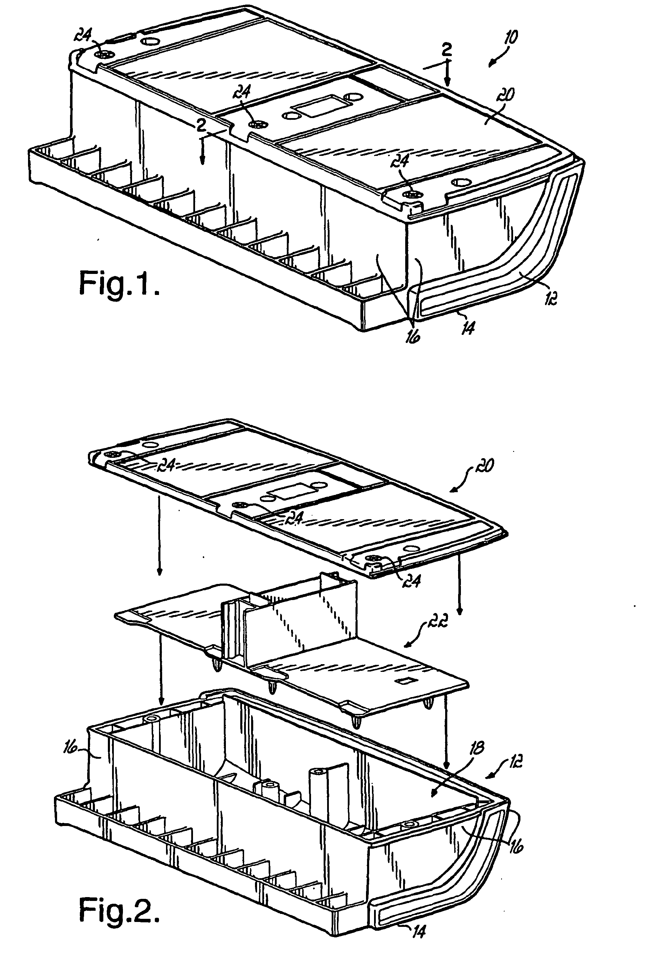

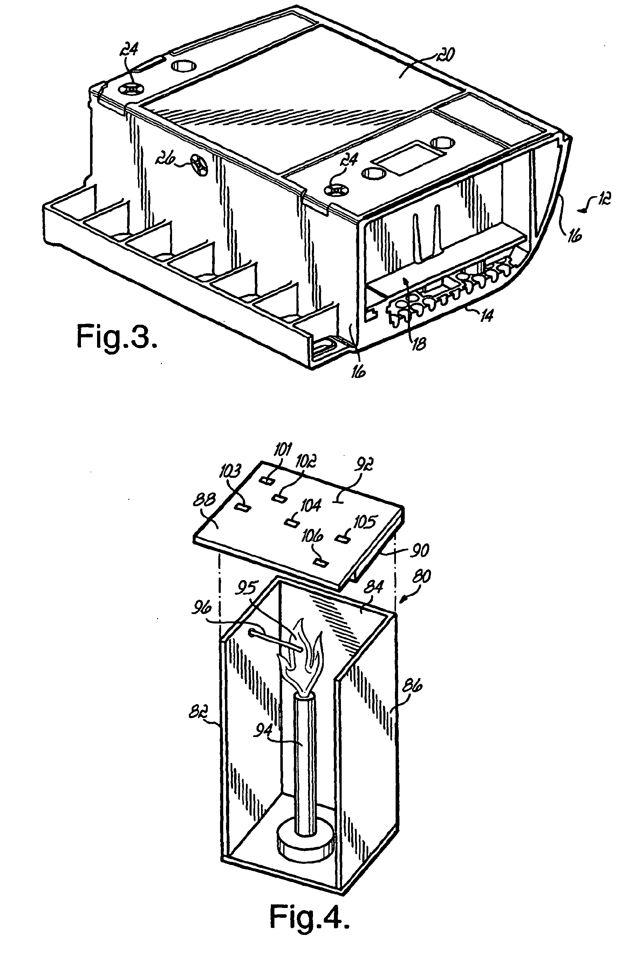

FIGS. 1-3 depict a battery case 10 of the present invention. FIG. 1 depicts the battery case 10 in perspective view and shows the base portion 12 and cover portion 20 that define the battery case 10. Base portion 12 includes a bottom 14 and a plurality of sidewalls 16. Referring to the exploded view of FIG. 2 and the partially cut-away perspective view of FIG. 3, the bottom 14 and sidewalls 16 of base portion 12 define an interior compartment 18 within which the operating components (not shown) of the battery are housed. One or more internal structural components 22 may be placed within the interior compartment 18. These internal structural components 22 include such items as support plates, terminal edge protectors and terminal covers. The cover portion 20 engages the sidewalls 16 to enclose the interior compartment 18. The partially cut-away perspective view of FIG. 3 best shows the cover portion 20 engaging the sidewalls 16 to enclose the interior compartment, with the internal structural component 22 housed therein. Although not shown, the interior compartment 18 will further include, for example, the battery ccll(s), which includes electrodes and electrolyte and electrode terminals.

During operation of the battery enclosed within the battery case 10 of the present invention, abusive overcharging can spark a fire within the battery case 10. In accordance with the present invention, the battery case 10 including the base portion 12 and cover portion 20, is made of an intumescent flame retardant polymeric material that also acts as a fire shield. When exposed to high temperatures or to an actual fire, the intumescent flame retardant polymeric material swells and provides thermal insulation. More importantly, the intumescent flame retardant polymeric material will not bum through or melt down, even under intense fire. The polymeric material will also act as a true fire shield, and thus, will not allow fire to go through the battery case 10 and spread to neighboring objects. In an exemplary embodiment, internal structural components 22 may also be made of the intumescent flame retardant polymeric material in order to try to quench fires before they start, and to contribute to suppressing the spread of fire throughout the interior compartment. The same or different flame retardant material may be used for the internal structural components 22 as used for the battery case 10.

In an exemplary embodiment of the present invention, as depicted in FIGS. 1-3, the battery case 10 includes at least one vent hole 24 and/or 26 through which evolved gases can escape. Upon exposure to high thermal conditions, the intumescent flame retardant polymeric material may release gases, which can create a pressure build-up within the interior compartment 18 enclosed by the battery case 10. The one or more vent holes 24 and/or 26 in the battery case reduce that pressure build-up by allowing those gases to escape. Advantageously, a plurality of vent holes 24 and/or 26 are distributed throughout the battery case 10 to provide optimum venting. More advantageously, a plurality of vent holes 24 is provided in the cover portion 20 of the battery case 10 to allow the evolved gases to escape from the top of the battery case 10. A gas-permeable membrane (not shown) may be provided in conjunction with the vent holes 24, 26 to permit gases to escape while preventing fluids and/or solid particles from escaping. As shown in FIG. 3, vent holes 26 may also be provided in the base portion 12, such as in the sidewalls 16 adjacent the cover portion 20. in one embodiment of the present invention, the base polymer for the intumescent flame retardant polymeric composition is a blend of polyphenylene oxide and polypropylene. One commercial example of this base polymer is Noryl PPX® available from GE Plastics. This base polymer may be an unfilled grade or a glass fiber filled grade. The amount of glass fiber in the base polymer may vary between 0-60 parts by weight. Advantageously, the polymer is a filled grade with 20-45 parts by weight glass fiber. This polymer provides good mechanical properties (tensile strength, elongation, modulus and impact strength), good electrical properties (low dielectric constant), ease of processing, and chemical stability. However, the base polymer of the polymeric composition for the battery case 10 of the present invention is not limited to this particular blend. The base polymer may be a thermoplastic polymer, including polyethylene, polypropylene, nylon, polystyrene, a styrene-acrylonitrile copolymer, and a butadiene-styrene-acrylonitrile terpolymer. The base polymer may also be a thermoset polymer, including polyurethanes, rubber, phenolics and epoxies.

In another embodiment of the present invention, the fire resistant additive is as described in related U.S. Application No. 20060270759 entitled "Halogen Free Fire Retardant System For Low Heat Release Polymers," filed on even date herewith, and incorporated by reference herein in its entirety. As described therein, compounds based on nitrogen chemistry (for example melamine cyanurate or ammonium cyanurate) or nitrogen phosphorus chemistry (such as ammonium polyphosphate or melamine pyrophosphate) can be formulated with other ingredients to produce intumescent formulations for the battery case 10 that not only are efficient as fire retardants but also are efficient in reducing the heat release rate, during burning, of polymers to which they are added. These nitrogenous gas-generating agents may form 5-25 parts by weight of the fire resistant additive. A combination of resins is used as a polymeric binder for the intumescent fire retardant ingredients to provide desirable physical properties for the fire resistant additive and for the polymeric material to which the additive is added. The polymeric binder forms 20-45 parts by weight of the fire resistant additive. High density polyethylene (HDPE) is used in the binder for its strength, durability, low cost, high impact resistance and high chemical resistance. An α-olefin-containing copolymer is used in the binder for added impact strength. In a further exemplary embodiment, the fire resistant additive for the composition of the battery case 10 of the present invention includes 20-45 parts by weight of HDPE and 0-15 parts by weight of the α-olefin-containing copolymer for a total polymeric binder content of 20-45 parts. The fire resistant additive further includes 10-35 parts by weight of one or more water vapor-generating agents for intumescence, 1-5 parts by weight of an antioxidant for heat stability, and optionally, up to 15 parts by weight of a reinforcing agent. The fire resistant additive may be added in any desired amount, for example in an amount of 10-50 parts by weight and advantageously 20-45 parts by weight, to a moldable base polymer to achieve a desired balance between physical properties and flammability performance.

The HDPE constituent of the fire resistant additive of the above-described embodiment of the present invention has a density in the range of 0.940-0.970 g/cm³. Such materials are produced using suitable known catalysts at a relatively low pressure of ethylene. HDPE assists in preventing melt dripping during a fire. HDPE is available with molecular weights ranging from a low molecular weight of about 10,000 (usually waxes) to an ultrahigh molecular weight (UHMW-HDPE) of several million. Wide variation of branching and density are also available.

Many grades of HDPE may be used in the present invention depending on the method of processing. High molecular weight/high melt viscosity grades are used for blow molding applications. Low melt viscosity grades are preferred for injection molding. Extrusion is normally performed using intermediate melt viscosity. HDPE by itself may be formulated into the fire resistant additive, for example, in an amount of 20-45 parts by weight of the system formulation; however, the resulting polymer may have poor mechanical properties, which may be unacceptable for particular applications. Thus, a portion of the polymer binder, for example, up to 15 parts by weight of the additive formulation, is an α-olefin-containing copolymer having a density less than the density of the HDPE. For example, the α-olefin-containing copolymer may be a linear low density polyethylene copolymer having a density in the range of 0.870-0.910 g/cm³. Exemplary α-olefin-containing copolymers include copolymers of ethylene with one of butene, hexene and octene. The ethylene-butene, ethylene-hexene, and ethylene-oclene copolymers advantageously have a density in the range of 0.870-0.910 g/cm³. The ethylene-octene copolymers supplied by ExxonMobil Chemical Co. under the Exact® product line are exemplary, for example, Exact® 0210 and Exact® 8210.

The nitrogenous gas-generating agent present in the fire resistant additive of the above-described embodiment of the present invention in an amount of 5-25 parts by weight. These agents generate nitrogen-containing gases in order to foam the polymeric matrix before the material is consumed by the fire. The residue that remains after burning most of the organic material will have a porous char structure and will thus be effective as a thermal barrier. The nitrogenous gas-generating agents are any of amines, ureas, guanidines, guanamines, s-triazines, amino acids, salts thereof, and mixtures thereof. These agents generate N₂ gas or NH₃ gas when heated. Advantageously, the nitrogenous gas-generating agent is a salt, including phosphates, phosphonates, phosphinates, borates, cyanurates, sulfates, and mixtures thereof. Further advantageously, the nitrogenous gas-generating agent is one or more of phosphates, polyphosphates, pyrophosphates or cyanurates of ammonium or melamine. Thus, the nitrogenous gas-generating agent may be a nitrogen-containing compound that generates N₂ or NH₃ gas upon heating, or a nitrogen and phosphorous-containing compound that generates N₂ or NH₃ gas upon heating. The phosphorous-containing compounds may also form phosphoric acid upon heating, which will act as a catalyst to encourage char formation.

The water vapor-generating agent is present in the fire resistant additive of the above-described embodiment of the present invention in an amount of 5-25 parts by weight. These agents induce intumescence and cool down the fire. Hydrated magnesia is particularly effective, but hydrated alumina will also emit water vapor during burning. Intercalated graphite has also been found to induce intumescence. Intercalated graphite is produced by treating graphite with acid and then washing the acid out, leaving behind water between the crystalline layers of the graphite. Upon heating, the water expands, thereby expanding the graphite, and vaporizes to produce water vapor that cools down the fire. Thus, in an exemplary embodiment of the present invention, hydrated magnesia and intercalated graphite are used in combination to provide intumescence and a low heat release rate.

An antioxidant is included in the fire resistant additive in accordance with the present invention in an amount of 1-5 parts by weight to impart thermal and oxidation stability. Although any suitably compatible stabilizer may be used with HDPE and the α-olefin-containing copolymer for protection against heat and oxygen, it has been found that a system consisting of distearylthiodipropionate (DSTDP) and a butylated reaction product of p-cresol and dicyclopentadiene (e.g., Wingstay® L) is very effective as an antioxidant. Other thio-based antioxidants and/or hindered phenol antioxidants may be used for stabilizing the intumescent material against thermal oxidation.

Optionally, the fire resistant additive in accordance with the present invention may include a reinforcing agent, such as a glass fiber reinforcing filler, which is added in an amount up to 15 parts by weight to provide an increased strength in the structure of the intumescent material after burning, and to enhance the action of the system as a fire shield. The presence of 3% or higher of glass fiber reinforcing filler may be needed in some formulations to prevent the intumesced residue from being friable, which means brittle or easily broken into small fragments or reduced to powder. Advantageously, the fire retardant system includes 3-10% glass fibers. In addition to glass fibers, other reinforcing agents may be used to provide strength to the residue, including titanium dioxide and mica. A mixture of various reinforcing agents may also be used.

None of the constituents of the fire resistant additive include a halogen. Thus, the fire resistant additive may be essentially halogen-free. By essentially, we refer to the possibility that small impurity amounts of halogens may be present in the raw materials used to form the fire resistant additive, but the total halogen content should be less than 0.5 parts by weight. Most advantageously, the fire resistant additive will contain 0% halogen content.

The mixing of fire resistant additive formulations described herein on a laboratory scale was achieved by different methods. The ingredients for each formulation of the additive were weighed and dry blended. Melt mixing and extrusion into a continuous rod was accomplished by using a Brabender extruder with a 20 mm barrel diameter. The extruder was designed to have three (3) heating zones on the barrel. These heating zones were controlled at temperatures ranging between 150°C and 290°C depending on the composition of the material being extruded. The rod die was heated to 260°C or lower temperatures. The extruded rod was allowed to come to room temperature before pelletizing. Pellets were used to compression mold about 2 mm thick slabs. Samples for UL fire testing, fire shielding test, and for mechanical properties were cut from the compression molded samples.

Three other methods have been used for melt mixing samples in the laboratory. The first involved the use of a two roll heated mill. For an intumescent formulation based on polyethylene, the rolls were preheated to 65°C, and the resins and stabilizers were shear mixed for about five minutes. During this time, the temperature rises to about 150°C due to shearing. The rest of the ingredients were then added and allowed to mix for an additional period of about five to ten minutes, depending on how fast a uniform blend is observed.

The second method for melt blending the compositions was by using a Brabender bowl, which is a small Internal mixer. The cavity was heated to 120°C before adding the resins and stabilizer. The blades inside the mixing bowl were rotated at 120 rpm and the ingredients were mixed for about 2 to 3 minutes. The temperature during this stage of mixing was not allowed to exceed 140°C. The rest of the ingredients were then added in, and thoroughly mixed.

The third method of laboratory mixing employed a 2-pound Banbury internal mixer. A similar procedure to that used for the Brabender ball mixing was employed. Good mixing leading to a uniform product was observed using each of the above mixing procedures.

For all these processes, higher temperatures are used when processing resins with a higher melting point than polyethylene. Uniformity of mixing is determined by two methods. The amount of filler in the matrix is determined by measuring percent ash remaining after pyrolysis. A minimum of three samples from each extruded batch are analyzed. Samples are pyrolyzed in a furnace at 800°C for 10 minutes; the remaining ash is weighed after cooling to room temperature (see ASTM D 1278), and percent ash content is calculated. Ash content is a measure of organic filler in the sample that remains after all organics and volatiles are driven off by pyrolysis. Variation in ash content between batches should not exceed +/- 3%. Processing conditions used in the lab for proper mixing of the additives are used to guide large-scale factory mixing of the additives.

A Buss Kneader extruder with a 70 mm or larger diameter barrel followed by a single screw extruder has been successfully used to produce similar formulations. All ingredients except the reinforcing agent are dry mixed together, placed in a super sack and poured into a hopper. The dry mix is fed from the hopper to the Buss Kneader extruder using a gravimetric feeder to meter in the material at the exact desired rate. The extruder barrel is heated to temperatures ranging from 140-180°C. In the barrel, the polymeric binder melts and the mixing process with the other ingredients begins. Mixing continues as the material travels down the heated barrel. In the Buss Kneader, mixing is performed using a low shear screw. The reinforcing agent, such as glass fibers, is introduced at a later stage using a port closer to the extruder exit in order to preserve the glass fiber from excessive breakage. The polymer melt then exits the Buss Kneader and enters a crosshead single screw extruder to complete the blending process. The blended mixture is then extruded into ribbons by exiting through a multi-strand ribbon die. The ribbons are then cut at the die face into pellets using a rotating knife. The pellets are dropped onto a bed and cooled using air or water before they are dried and conveyed to a container for storage and shipping. These fire resistant additive pellets are then available for mixing with pellets of the base polymer and molding processing to form the battery case of the present invention.

Flammability testing and mechanical properties determination were conducted on samples prepared in the lab. The main function of the intumescent flame retardant polymeric composition is in resisting the spread of flame from a fire source and shielding articles protected by the composition from high temperature rise. The characteristics or property of intumescence efficiency may be measured by a procedure using an apparatus as described in connection with FIG. 4 or by the ASTM E1354 cone calorimeter method.

All of the compositions illustrated in this specification have been tested to assess the fire shielding capabilities of the intumescent flame retardant polymeric compositions, according to the present invention. The standardized test for evaluating and/or verifying fire performance is the ASTM E1354 cone calorimeter test. Another relatively simple test for evaluating fire-shielding capabilities involves exposing plaques made of the intumescent flame retardant polymeric compositions, according to the present invention, to a Bunsen flame for long periods of time. This small scale "Bunsen-burner" test is effective for product development in the laboratory setting. In the "Bunsen-burner" test, flame temperatures are in excess of 1000°C. The sample is considered to pass this test if it continues to provide fire shielding for at least thirty (30) minutes without burnthrough, or melt dripping. Because the shielding is not compromised, a drastic reduction in temperature on the surface of the sample opposite to the flame is achieved.

A "Bunsen-burner" test apparatus 80 is schematically shown in FIG. 4. The apparatus 80 includes a three-wall steel chamber comprising left side wall 82, back wall 84, and right side wall 86. Each wall is a steel plate 229 mm high, 127 mm wide, and 1 mm thick. The walls are joined at their edges as illustrated in FIG. 4 to form a generally square-shaped (in cross-section) chamber with an open side or front.

A 152 mm by 152 mm by 1 mm thick steel plate adapted to be placed on top of the walls 82, 84, and 86 is employed as a roof member 88. During a test, the roof member 88 carries affixed to its lower surface a molded 127 mm by 152 mm by 2.75 mm rectangular molded slab 90 of material to be tested for intumescence effectiveness as a heat shield. It should be appreciated that the thickness of 2.75 mm of the test specimen (as well as its composition) is important to the repeatability of this test. As illustrated, the slab 90 faces downward inside of the roof member 88 and chamber during the test. On the top surface 92 of the roof member 88 are located six thermocouple leads in the locations indicated, respectively 101, 102, 103, 104, 105, and 106. It should be appreciated that test specimens with other thickness values can also be tested.

A 165 mm tall Bunsen burner 94 is used as the flame or fire source. The height of the burner 94 does not include the flame height. The flame height on top of the burner 94 is of the order of 60 mm, and it is adjusted during each test so that the tip of the inner blue cone of the flame 95, its hottest part, touches the surface of the intumescent material test specimen. A thermocouple indicated at 96 was placed at the lower surface of the slab 90 to measure the flame temperature as it impinged on the intumescent material at that point. The flame temperature as measured by the thermocouple 96 was at a location on the intumescent material opposite the location of the thermocouple 104 on the top surface 92 of the roof member 88.

While six thermocouple locations are indicated in FIG. 4, experience has shown that equivalent useful data is obtained from using only four thermocouples at locations 101, 102, 104, and 106. It should be appreciated that temperature differences between the flame thermocouple and the roof plate thermocouples are used as a measure of the effectiveness of intumescent material in providing thermal and fire shielding.

Aspects of the present invention will now be illustrated, without intending any limitation, by the following examples. Unless otherwise indicated, all parts and percentages are by weight.

### EXAMPLES:

Table 1 lists a general formulation of a non-halogenated fire resistant additive that may be added to different base polymers to make intumescent flame retardant polymers for the battery case 10 of the present invention. The components and the amounts of each component have been further described in detail above. Table 1 also lists four exemplary formulations 1-4 in accordance with this embodiment of the present invention.

**TABLE 1**

| **Ingredients** | **General Formulation** | **Formulation 1 Fort** |
|---|---|---|
| HDPE | 20-45 | 13¹ |
| Polyolefin Copolymer | | 30⁴ |
| Nitrogenous Gas-Generating Agent | 5-25 | 17⁶ |
| Water Vapor-Generating Agent | 10-35 | 22⁸ |
| | | 8⁹ |
| Antioxidant | 1-5 | 1¹⁰ |
| | | 1¹¹ |
| Reinforcing Agent | 0-15 | 8¹² |
| Total | 100 | 100 |

| | | |
|---|---|---|
| ¹Fortiflex^{®} T50-2000 from BP Solvay Polyethylene: North America, Houston, TX. ² Finathene^{®} WR 201 from Atofina Petrochemicals, Houston, TX. ³ Paxon^{®} BA46-055 from ExxonMobil Chemical Co., Houston, TX. ⁴ Exact^{®} 0210 (ethylene-octene copolymer) from ExxonMobil Chemical Co., Houston, TX. ⁵ Exact^{®} 8210 (ethylene-octene copolymer) from ExxonMobil Chemical Co., Houston, TX. ⁶ FR Cros™ 484 (ammonia polyphosphate) from cfb Budenheim Iberica Comercial, Spain and distributed by Flame Chk, Inc., Medford NJ. ⁷ Budit^{®} 315 (melamine cyanurate) from cfb Budenheim Iberica Comercial, Spain and distributed by Flame Chk, Inc., Medford NJ ⁸ Magshield^{®} (hydrated magnesia) from Martin Marietta Magnesia Specialties, Baltimore, MD. ⁹ Graphite 3494 (intercalated graphite) from Asbury Carbons. Inc., Asbury. NJ. ¹⁰ Cyanox^{®} STDP (distearylthiodipropionate) from Cytec Industries Inc., West Patterson, NJ. ¹¹ Wingstay^{®} L (hindered phenol antioxidant) from Eliokem, Akron, OH and distributed by R.T. Vanderbilt Company, Inc., Norwalk, CT. ¹²Glass Fibers from PPG Industries, Pittsburgh, PA. | | |

In Formulation 1, the non-halogen fire retardant substance is an ammonium polyphosphate (FR Cros^{™} 484, Budenheim). A combination of resins is used as the polymer binder in the fire resistant additive. The first resin is an injection molding grade of HDPE (T50-2000, BP Solvay Polyethylene) having a density of 0.953 g/cm³ (ASTM D4883) and a melt index of 20 g/10 min. at 190 °C under a load of 2.16 kg (ASTM D1238). The second resin used is a linear low density ethylene-α-olefin copolymer (Exact® 0210, ExxonMobil Chemical Co.) that has a density of 0.902 g/cm³, and a melt index of 25 g/10 min. Specifically, Exact® 0210 is an ethylene octene copolymer produced by ExxonMobil using a metallocine single site catalyst. The resin is added to the formulation to improve impact strength.

The hydrated magnesia (Magshield®) and intercalated graphite both generate water vapor at high temperatures, and are added to intumesce the material and to slow down heat release from the polymer material during fire. The antioxidants DSTDP (distearylthiodipropionate) and Wingstay® L (a hindered amine) are added to impart heat stability and improve the aging characteristics of the material.

The above Formulation 1 additive may be added to other polymers at various concentrations to build up a desired degree of fire retardancy for the polymeric material. For example, when the fire retardant formulation is added to an injection molding grade of HDPE (e.g., T50-2000, from BP Solvay) at 30 wt.% level, it imparts fire retardancy by slowing down the horizontal burn rate and preventing flaming melt dripping of the resin, and gives rise to an appreciably decreased rate of heat release when the material is on fire.

The fire resistant intumescent additive Formulation 2, also shown in Table 1, was developed based on melamine cyanurate (BUDIT® 315). Formulation 2 also produces polymers with reduced peak heat release rate. Formulation 2 used a blow molding grade of HDPE in a greater amount than the injection molding grade HDPE in Formulation 1 (30 and 13 parts, respectively). A different grade of linear low density ethylene octene copolymer was used, namely Exact® 8210, in a lesser amount than the grade used in Formulation 1 (13 and 30 parts, respectively). This copolymer is also made by ExxonMobil using the metallocene single site catalyst. The copolymer has elastic and plastic properties, and when added to the intumescent formulation, it enhances impact resistance of the material. The copolymer has a density of 0.882 g/cm³ and a melt index of 10 g/10 min. measured per ASTM D1238. As with Formulation 1, the Formulation 2 additive may be added to other polymers at various concentrations to build up a desired degree of fire retardancy for the polymeric material.

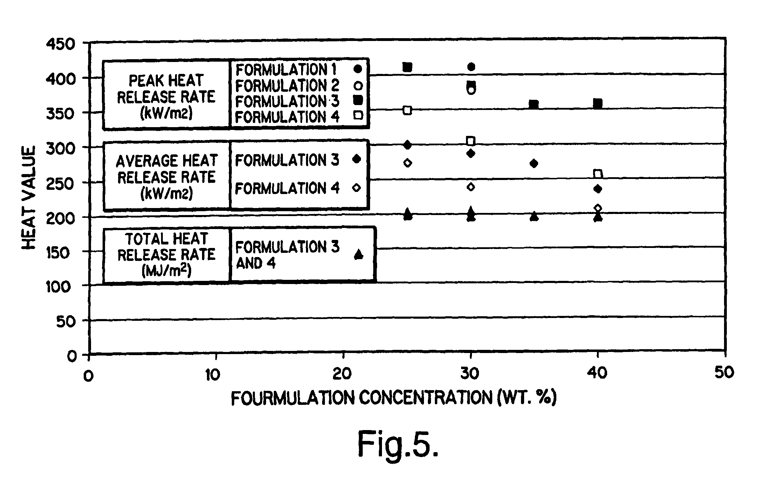

Formulations 3 and 4 set forth in Table 1 can also be added to HDPE or other polymers to reduce the heat release rate, as shown in FIG. 5. The two formulations were made using identical materials, including a blow molding grade of HDPE, except that Formulation 3 includes 22 parts hydrated magnesia as the sole water vapor-generating agent and Formulation 4 includes a combination of 19.8 parts hydrated magnesia and 10 parts intercalated graphite as the water vapor-generating agent, with the amounts of the other components in the formulation being decreased to accommodate the graphite addition. Addition of either of these fire resistant additives into HDPE appreciably reduces the peak heat release rate from 917 kW/m² for polyethylene by itself to the values shown in FIG. 5. The heat release rate decreases with increase in the concentration of either formulation in the HDPE. However, the presence of intercalated graphite in Formulation 4 leads to a more prominent decrease in the peak and average rates of heat released. The total heat release rate is essentially the heat of combustion and is essentially the same with and without graphite.

Another fire resistant additive, Formulation 5 which is not according to the invention, is set forth in Table 2. In this embodiment of the present invention, the additive is based on a combination of a chlorinated paraffin, a chlorinated polyethylene and antimony oxide. These components serve as fire retardant char forming substances and as impact strength improvers. Formulation 5 also includes intercalated graphite and hydrated magnesia as water vapor-generating agents, DSTDP and the butylated product of p-cresol and dicyclopentadiene (Wingstay®) as antioxidants, and a glass fiber reinforcing agent. Formulation 5 not only encourages intumescence, char formation, and low heat release rate, but also releases antimony trichloride and antimony pentachloride, which provide free radicals in the gas phase to quench fire. Advantageously, the battery case includes vent holes to permit these gases to escape. Formulation 5 is particularly suitable for making internal structural components 22 for the battery to try to quench fires before they start.

**TABLE 2**

| **Ingredients** | **FORMULATION 5** |
|---|---|
| Chlorinated Polyethylene | 38¹ |
| Chlorinated Paraffin | 8² |
| Antimony Oxide (Sb₂O₃) | 9 |
| Water Vapor-Generating Agent | 253 |
| | 9⁴ |
| Antioxidant | 1⁵ |
| | 1⁶ |
| Reinforcing Agent | 9⁷ |
| Total | 100 |

| | |
|---|---|
| ¹ CPE 3615. DuPont Dow ² Paroil^{®} 145, Dover Chemical Corp.. Dover, OH. ³ Magshield^{®} (hydrated magnesia) from Martin Marietta Magnesia Specialties, Baltimore, MD. ⁴ Graphite 3579ntercalated graphite) from Asbury Carbons, Inc., Asbury, NJ. ⁵ Cyanox^{®} STDP (distearylthiodipropionate) from Cytec Industries Inc., West Patterson. NJ. ⁶ Wingstay^{®} L (hindered phenol) from Eliokem, Akron, OH, distributed by R.T. Vanderbilt Co. Inc., Norwalk, CT. ⁷ Glass Fibers from PPG Industries, Pittsburgh, PA. | |

The two general types of exemplary additives, namely the type in Table 1 and the type in Table 2, are composed of several ingredients compounded together to impart fire retardancy and mechanical strength to the battery case 10 before and after exposure to fire. Increased char formation and reduced heat release rate are two of the mechanisms designed into those additives to control spread or damage of fires. Both types of exemplary additives contain a polymer binder to compensate for the loss in impact strength that occurs when the fire resistant additives are added to base polymers in large concentration. Notably, neither of these additives contains bromine fire retardant compounds, which is advantageous.

The mechanical properties of the flame retardant polymer composition made by mixing 30 wt.% of Formulation 1 with 70 wt.% injection molding grade HDPE (T50-2000) are shown in Table 3. The mechanical properties, although lower than those of the original resin, are still good. The notched Izod impact strength is 33,612/m is (0.63 ft-Ib/inch), which is close to fire resistant additive.

**TABLE 3**

| **PROPERTIES** | **70% HDPE¹ 30% FORM. 1** | **70% HDPE¹ 30% FORM.2** | **70% PPX't'o PPX630² 30% FORM. 3** | **70%PPX640² 30% FORM. 3** |
|---|---|---|---|---|
| Tensile Strangth MPa | (2336) | (2284) | (3032) | (3209) |
| (psi) (ASTM D-638) | 16,106 | 15,748 | 20,905 | 22,125 |
| Elongation (%) (ASTM D.638) | 17 | 21 | 6.2 | 3.1 |
| Modulus (psi) MPa | (79000) | (88938) | (180000) | (249000) |
| (ASTM D-638) | 544,7 | 613,2 1241,1 | | 1716,8 |
| Notched Izod 2/m | (0.69) | (0.68) | (2.1) | (1.7) |
| Impact Strength (ft· lb/in) (Flow Direction) (ASTM D-256) | 33,61 | 35,21 | 112,03 | 90,69 |

| | | | | |
|---|---|---|---|---|
| ¹ Fortiflex^{®} T50-2000 (HDPE) from BP Solvay Polyethylene North America, Houston, TX. ² Noryl PPX^{®} PPX630 (polyphenylene oxide/polypropylene, 30% filled) from GE Plastics, Pittsfield, MA. ³Noryl PPX^{®} PPX640 (polyphenylene oxide/polypropylene, 40% filled) from GE Plastics, Pittsfield, MA. | | | | |

The fire retardant polymer made with Formulation 1 bums slowly, does not drip during burning, and hence does not spread fire to neighboring materials. It also generates a low amount of smoke. When the formulation was flame tested using the ASTM E1354 cone calorimeter method, under a heat flux of 35 kW/m², the peak heat release rate (intumescence efficiency) was 414 kW/m², as shown in FIG. 5, as compared to 917 kW/m² for virgin HDPE. The amount of smoke generated during fire was 15 m² (total smoke) as compared to 8 m² for virgin polyethylene and much less than the 40 to 82 m² normally measured for fire retardant polymers.

When 30 wt.% of Formulation 2 is added to 70 wt.% of an injection molding grade of HDPE (T50-2000 from BP Solvay), good mechanical properties are obtained as seen in Table 3 above. The notched Izod impact strength is 0.66 ft-lb/in. The burning characteristics are also good. The horizontal burn test measured per UL 94-HB was only 17 mm/min. Only a slight degree of melt dripping and very low concentration of smoke were observed during fire. The results from the ASTM E1354 cone calorimeter test conducted at 35 kW/m² are also good. It took 117 seconds to ignite the sample compared to 102 seconds for virgin polyethylene. However, the biggest improvement was for the peak heat release rate, which was measured at 372 kW/m² (shown in FIG. 2) as compared to 917 kW/m² for the virgin HDPE. Smoke generation was only 15 m² (total smoke) compared to values of 40 to 82 m² measured for other fire retardant polymers.

Table 3 also provides, in accordance with an embodiment of the present invention, the mechanical properties of two flame retardant polymeric compositions comprising 30 wt.% of Formulation 3 blended with 70 wt.% of a Noryl PPX® base polymer. One composition used a 30% glass filled blend of the polyphenylene oxide and polypropylene polymer resin and the other composition used a 40% glass filled blend of the polyphenylene oxide and polypropylene polymer resin. For each of these examples, the fire resistant additive and the base polymer were melt-mixed and then compression molded into 300 mm x 300 mm x 3 mm slabs. Samples were cut from the slabs and used for measuring the tensile properties and impact strength properties. Other slabs were used to measure heat shielding effectiveness. The compositions made with the Noryl PPX® base polymer exhibited higher tensile strength, impact strength and modulus compared to the compositions made with the HDPE base polymer, and exhibited good elongation. Thus, while many polymers may be used for the base polymer, the blended polyphenylene oxide and polypropylene polymer resin provides exemplary physical properties for a battery case.

While physical properties are described for a 30 wt.% concentration of the fire resistant additives in HDPE and Noryl PPX® base polymers, it should be understood that the fire resistant additives, such as Formulations 1-5, may be combined with various base polymers and at various ratios to prepare intumescent flame retardant polymeric compositions for the battery case of the present invention. For example, the fire resistant additive may be added in an amount of 20-45 wt.% to a base polymer to provide a balance between physical properties and flammability properties. In addition to polyethylene and the blended polyphenylene oxide and polypropylene polymer resin, the fire resistant additive may also be added to other thermoplastics such as polypropylene, nylon, polystyrene, styrene-acrylonitrile copolymers, and butadiene-styrene-acrylonitrile terpolymers, or to thermoset polymers such as polyurethanes, epoxies, rubber, and phenolics, in order to make intumescent flame retardant polymeric materials that, in a fire, will intumesce to provide better heat shielding and slow heat release rate. Advantageously, a battery case of the present invention made of a flame retardant polymeric composition has a peak heat release rate of less than 500 kW/m², as measured by the ASTM E1354 cone calorimeter test, and more advantageously, less than 400 kW/m m².

## Claims

1. A battery case (10) comprising:
a base portion (12) having a bottom (14) and side walls (16) forming an interior compartment (18) for holding a battery cell and internal structural components (22); and
a cover portion (20) engaging the side walls (16) for enclosing the compartment (18);
wherein the base portion (12) and cover portion (20) are formed of a flame retardant polymeric composition comprising a base polymer and a fire resistant additive; and
**characterised in that** the fire resistant additive comprises, on the basis of 100 parts by weight blended mixture:
20-45 parts of a polymeric binder, the polymeric binder comprising:
high density polyethylene having a density in the range of 0.940-0.970 g/cm3; and
an α-olefin-cantaining copolymer having a density less than the density of the high density polyethylene;
5-25 parts of a nitrogenous gas-generating agent selected from the group consisting of amines, ureas, guanidines, guanamines, s-triazines, amino acids, salts thereof, and mixtures thereof, wherein the salts are selected from the group consisting of phosphates, phosphonates, phosphinates, borates, cyanurates, sulfates and mixtures thereof;
10-35 parts of a water vapour-generating agent;
1-5 parts of an antioxidant; and
0-15 parts of a reinforcing agent,
wherein the flame retardant polymeric composition is halogen free.

2. A battery case according to Claim 1, wherein the flame retardant polymeric composition comprises:
a base polymer; and
a fire resistant additive;
wherein the base polymer comprises polyphenylene oxide, polypropylene, and 0-60 wt.% glass fiber and the fire retardant additive comprises 20-45 parts of the high density polyethylene and 15 parts of the α-olefin-containing copolymer, for a total of 20-45 parts polymeric binder.

3. A battery case of Claim 1 or Claim 2, wherein the α-olefin-containing copolymer is a copolymer of ethylene with one of butene, hexene and octene having a density in the range of 0.870-0.910 g/cm3.

4. A battery case of Claim 1 or Claim 2, wherein the α-olefin-containing polymer is a linear low density ethylene octene copolymer having a density in the range of 0.870-0.910 g/cm3.

5. A battery case of any of the preceding claims, wherein the additive comprises 20-45 parts of the high density polyethylene and 15 parts of the α-oletin-containing copolymer for a total of 20-45 parts polymeric binder.

6. A battery case of any of the preceding claims, wherein nitrogenous gas-generating agent is an ammonium salt, a melamine salt, or a mixture thereof.

7. A battery case of any of the preceding claims, wherein the nitrogenous gas-generating agent is selected from the group consisting of melamine phosphates, melamine polyphosphates, melamine pyrophosphates, melamine cyanurates, ammonium phosphates, ammonium polyphosphates, ammonium pyrophosphates, ammonium cyanurates, and mixtures thereof.

8. A battery case of any of the preceding claims, wherein the water vapour-generating agent is selected from the group consisting of hydrated magnesia, hydrated alumina, intercalated graphite, and mixtures thereof.

9. A battery case of any of the preceding claims, wherein the antioxidant is selected from the group consisting of distearylthiodipropionate, a hindered phenol, and mixtures thereof.

10. A battery case of any of the preceding claims, wherein the reinforcing agent is selected from the group consisting of: glass fibers, mica, titanium oxide and mixtures thereof.

11. A battery case of Claim 1, wherein the base polymer comprises polyphenylene oxide, polypropylene, and 0-60 wt% glass fiber.

12. A battery case of Claim 1, wherein the base polymer comprises polyphenylenc oxide, polypropylene, and 20-45 wt.% glass fiber.

13. A battery case of Claim 1, wherein the flame retardant polymeric composition comprises 10-50 wt.% of the fire resistant additive.

14. A battery case of any of the preceding claims, wherein the fire resistant additive includes intercalated graphite.

15. A battery case of any of the preceding claims, further comprising at least one internal structural component (22) in the interior compartment (18) that is made of the flame retardant polymeric composition.

16. A battery case of any of the preceding claims, wherein at least one of the cover portions (20) and the base portion (12) includes a plurality of the vent holes (24) through which evolved gases are permitted to escape

17. A battery case of any of the preceding claims, wherein the base polymer comprises 20-45 wt.% glass fiber.

18. A battery case of any of the preceding claims, further comprising at least one internal structural component (22) in the interior compartment (18) that is made of the flame retardant polymeric composition.

19. A battery case of any of the preceding claims, wherein the fire resistant additive comprises, on the basis of 100 parts by weight blended mixture:
20-45 parts of a polymeric binder comprising high density polyethylene having a density in the range of 0.940-0.970 g/cm3 and an α-olefin-containing copolymer having a density in the range of 0.870-0.910 g/cm3, wherein 20-45 parts of the blended mixture is the high density polyethylene and 0-15 parts of the blended mixture is the α-olefin-containing copolymer;
15-25 parts of a nitrogenous gas-generating agent selected from the group consisting of an ammonium salt, a melamine salt, or mixtures thereof, wherein the salts are selected from the group consisting of phosphates, phosphonates, phosphinates, borates, cyanurates, sulfates and mixtures thereof; 20-30 parts of a water vapour-generating agent selected from the group consisting of hydrated magnesia, hydrated alumina, intercalated graphite, and mixtures thereof;
1-5 parts of an antioxidant selected from the group consisting of distearylthiodpropionate, a hindered phenol, and mixtures thereof;
and 3-10 parts of a reinforcing agent selected from the group consisting of glass fibers, mica, titanium oxide and mixtures thereof,
wherein the additive is halogen-free.

## Patentansprüche

1. Ein Batteriegehäuse (10), umfassend:
einen Basisabschnitt (12) mit einem Boden (14) und Seitenwänden (16), die eine Innenkammer (18) zum Halten einer Batteriezelle und innerer struktureller Komponenten (22) bilden; und
einen Abdeckabschnitt (20), der in die Seitenwände (16) eingreift, um die Kammer (18) zu umgeben;
wobei der Basisabschnitt (12) und der Abdeckabschnitt (20) aus einer schwerentflammbaren Polymerzusammensetzung gebildet sind, die ein Basispolymer und einen feuerbeständigen Zusatzstoff umfasst; und
**dadurch gekennzeichnet, dass** der feuerbeständige Zusatzstoff auf der Basis von 100 Gewichtsteilen vermengter Mischung Folgendes umfasst:
20-45 Teile eines Polymerbinders, wobei der Polymerbinder umfasst:
Polyethylen hoher Dichte mit einer Dichte im Bereich von 0,940-0,970 g/cm3; und
ein α-Olefin enthaltendes Copolymer mit einer geringeren Dichte als die Dichte des Polyethylens mit hoher Dichte;
5-25 Teile eines stickstoffhaltigen gaserzeugenden Mittels, das ausgewählt ist aus der Gruppe bestehend aus Aminen, Harnstoffen, Guanidinen, Guanaminen, s-Triazinen, Aminosäuren, Salzen davon und Mischungen davon, wobei die Salze ausgewählt sind aus der Gruppe bestehend aus Phosphaten, Phosphonaten, Phosphinaten, Boraten, Cyanuraten, Sulfaten und Mischungen davon;
10-35 Teile eines Wasserdampf erzeugenden Mittels;
1-5 Teile eines Antioxidationsmittels; und
0-15 Teile eines Verstärkungsmittels,
wobei die schwerentflammbare Polymerzusammensetzung halogenfrei ist.

2. Batteriegehäuse nach Anspruch 1, wobei die schwerentflammbare Polymerzusammensetzung Folgendes umfasst:
ein Basispolymer; und
einen feuerbeständigen Zusatzstoff;
wobei das Basispolymer Polyphenylenoxid, Polypropylen und 0-60 Gew.% Glasfaser umfasst und der feuerbeständige Zusatzstoff 20-45 Teile Polyethylen hoher Dichte und 15 Teile des α-Olefin enthaltenden Copolymers für eine Gesamtmenge von 20-45 Teilen Polymerbinder umfasst.

3. Batteriegehäuse nach Anspruch 1 oder Anspruch 2, wobei das α-Olefin enthaltende Copolymer ein Copolymer aus Ethylen mit entweder Buten, Hexen und/oder Octen ist, das eine Dichte im Bereich von 0,870-0,910 g/cm3 aufweist.

4. Batteriegehäuse nach Anspruch 1 oder Anspruch 2, wobei das α-Olefin enthaltende Copolymer ein Ethylen-Octen-Copolymer niedriger Dichte mit einer Dichte im Bereich von 0,870-0,910 g/cm3 ist.

5. Batteriegehäuse nach einem der vorstehenden Ansprüche, wobei der Zusatzstoff 20-45 Teile des Polyethylens hoher Dichte und 15 Teile des α-Olefin enthaltenden Copolymers für eine Gesamtmenge von 20-45 Teilen Polymerbinder umfasst.

6. Batteriegehäuse nach einem der vorstehenden Ansprüche, wobei das stickstoffhaltige gaserzeugende Mittel ein Ammoniumsalz, ein Melaminsalz oder eine Mischung davon ist.

7. Batteriegehäuse nach einem der vorstehenden Ansprüche, wobei das stickstoffhaltige gaserzeugende Mittel ausgewählt ist aus der Gruppe bestehend aus: Melaminphosphaten, Melaminpolyphosphaten, Melaminpyrophosphaten, Melamincyanuraten, Ammoniumphosphaten, Ammoniumpolyphosphaten, Ammoniumpyrophosphaten, Ammoniumcyanuraten und Mischungen davon.

8. Batteriegehäuse nach einem der vorstehenden Ansprüche, wobei das Wasserdampf erzeugende Mittel ausgewählt ist aus der Gruppe bestehend aus: hydriertem Magnesiumoxid, hydriertem Aluminiumoxid, zwischengelagertem Grafit und Mischungen davon.

9. Batteriegehäuse nach einem der vorstehenden Ansprüche, wobei das Antioxidationsmittel ausgewählt ist aus der Gruppe bestehend aus: Distearylthiodipropionat, einem behinderten Phenol und Mischungen davon.

10. Batteriegehäuse nach einem der vorstehenden Ansprüche, wobei das Verstärkungsmittel ausgewählt ist aus der Gruppe bestehend aus: Glasfasern, Glimmer, Titanoxid und Mischungen davon.

11. Batteriegehäuse nach Anspruch 1, wobei das Basispolymer Polyphenylenoxid, Polypropylen und 0-60 Gew.-% Glasfaser umfasst.

12. Batteriegehäuse nach Anspruch 1, wobei das Basispolymer Polyphenylenoxid, Polypropylen und 20-45 Gew.-% Glasfaser umfasst.

13. Batteriegehäuse nach Anspruch 1, wobei die schwerentflammbare Polymerzusammensetzung 10-50 Gew.-% des feuerbeständigen Zusatzstoffes umfasst.

14. Batteriegehäuse nach einem der vorstehenden Ansprüche, wobei der feuerbeständige Zusatzstoff zwischengelagerten Grafit umfasst.

15. Batteriegehäuse nach einem der vorstehenden Ansprüche, ferner umfassend mindestens eine innere strukturelle Komponente (22) in der Innenkammer (18), die aus der schwerentflammbaren Polymerzusammensetzung hergestellt ist.

16. Batteriegehäuse nach einem der vorstehenden Ansprüche, wobei mindestens entweder die Abdeckabschnitte (20) und/oder der Basisabschnitt (12) eine Vielzahl der Belüftungslöcher (24) enthält, durch welche sich entwickelnde Gase entweichen können.

17. Batteriegehäuse nach einem der vorstehenden Ansprüche, wobei das Basispolymer 20-45 Gew.-% Glasfaser umfasst.

18. Batteriegehäuse nach einem der vorstehenden Ansprüche, ferner umfassend mindestens eine innere strukturelle Komponente (22) in der Innenkammer (18), die aus der schwerentflammbaren Polymerzusammensetzung hergestellt ist.

19. Batteriegehäuse nach einem der vorstehenden Ansprüche, wobei der feuerbeständige Zusatzstoff auf der Basis von 100 Gewichtsteilen vermengter Mischung Folgendes umfasst:
20-45 Teile eines Polymerbinders, umfassend Polyethylen hoher Dichte mit einer Dichte im Bereich von 0,940-0,970 g/cm3 und ein α-Olefin enthaltendes Copolymer mit einer Dichte im Bereich von 0,870-0,910 g/cm3, wobei 20-45 Teile der vermengten Mischung das Polyethylen hoher Dichte sind und 0-15 Teile der vermengten Mischung das α-Olefin enthaltende Copolymer sind;
15-25 Teile eines stickstoffhaltigen gaserzeugenden Mittels, das ausgewählt ist aus der Gruppe bestehend aus einem Ammoniumsalz, einem Melaminsalz oder Mischungen davon, wobei die Salze ausgewählt sind aus der Gruppe bestehend aus Phosphaten, Phosphinaten, Boraten, Cyanuraten, Sulfaten und Mischungen davon; 20-30 Teile eines Wasserdampf erzeugenden Mittels, das ausgewählt ist aus der Gruppe bestehend aus hydriertem Magnesiumoxid, hydriertem Aluminiumoxid, zwischengelagertem Grafit und Mischungen davon;
1-5 Teile eines Antioxidationsmittels, das ausgewählt ist aus der Gruppe bestehend aus Distearylthiodpropionat, einem behinderten Phenol und Mischungen davon;
und 3-10 Teile eines Verstärkungsmittels, das ausgewählt ist aus der Gruppe bestehend aus Glasfasern, Glimmer, Titanoxid und Mischungen davon,
wobei der Zusatzstoff halogenfrei ist.

## Revendications

1. Un boîtier de batterie (10) comportant :
une portion de base (12) ayant un dessous (14) et des parois latérales (16) formant un compartiment intérieur (18) pour contenir une cellule de batterie et des composants structurels internes (22) ; et
une portion de couverture (20) s'engageant dans les parois latérales (16) pour enfermer le compartiment (18) ;
où la portion de base (12) et la portion de couverture (20) sont formées d'une composition polymérique ignifugeante comportant un polymère de base et un additif résistant au feu ; et
**caractérisé en ce que** l'additif résistant au feu comporte, sur la base d'une mixture mélangée de 100 parties en poids :
de 20 à 45 parties d'un liant polymérique, le liant polymérique comportant :
un polyéthylène de haute densité ayant une densité allant de 0,940 à 0,970 g/cm³ ;
et
un copolymère contenant une α-oléfine ayant une densité inférieure à la densité du polyéthylène de haute densité ;
de 5 à 25 parties d'un agent générateur de gaz azoté sélectionné dans le groupe constitué d'amines, d'urées, de guanidines, de guanamines, de s-triazines, d'acides aminés, de sels de ces derniers, et de mixtures de ces derniers, où les sels sont sélectionnés dans le groupe constitué de phosphates, de phosphonates, de phosphinates, de borates, de cyanurates, de sulfates et de mixtures de ces derniers ;
de 10 à 35 parties d'un agent générateur de vapeur d'eau ;
de 1 à 5 partie(s) d'un antioxydant ; et
de 0 à 15 partie(s) d'un agent de renforcement,
où la composition polymérique ignifugeante est dépourvue d'halogène.

2. Un boîtier de batterie selon la revendication 1, où la composition polymérique ignifugeante comporte :
un polymère de base ; et
un additif résistant au feu ;
où le polymère de base comporte de l'oxyde de polyphénylène, du polypropylène, et de 0 à 60 % poids de fibre de verre et l'additif résistant au feu⁽¹⁾ comporte de 20 à 45 parties du polyéthylène de haute densité et 15 parties du copolymère contenant une α-oléfine, pour un total de 20 à 45 parties de liant polymérique.

3. Un boîtier de batterie de la revendication 1 ou la revendication 2, où le copolymère contenant une α-oléfine est un copolymère d'éthylène avec un élément parmi le butène, l'hexène et l'octène ayant une densité allant de 0,870 à 0,910 g/cm³.

4. Un boîtier de batterie de la revendication 1 ou la revendication 2, où le polymère contenant une α-oléfine est un copolymère éthylène octène de faible densité linéaire ayant une densité allant de 0,870 à 0,910 g/cm³.

5. Un boîtier de batterie de n'importe lesquelles des revendications précédentes, où l'additif comporte de 20 à 45 parties du polyéthylène de haute densité et 15 parties du copolymère contenant une α-oléfine pour un total de 20 à 45 parties de liant polymérique.

6. Un boîtier de batterie de n'importe lesquelles des revendications précédentes, où l'agent générateur de gaz azoté est un sel d'ammonium, un sel de mélamine, ou une mixture de ces derniers.

7. Un boîtier de batterie de n'importe lesquelles des revendications précédentes, où l'agent générateur de gaz azoté est sélectionné dans le groupe constitué de : phosphates de mélamine, polyphosphates de mélamine, pyrophosphates de mélamine, cyanurates de mélamine, phosphates d'ammonium, polyphosphates d'ammonium, pyrophosphates d'ammonium, cyanurates d'ammonium, et mixtures de ces derniers.

8. Un boîtier de batterie de n'importe lesquelles des revendications précédentes, où l'agent générateur de vapeur d'eau est sélectionné dans le groupe constitué de : magnésie hydratée, alumine hydratée, graphite intercalaire, et mixtures de ces derniers.

9. Un boîtier de batterie de n'importe lesquelles des revendications précédentes, où l'antioxydant est sélectionné dans le groupe constitué de : thiodipropionate de distéaryle, un phénol encombré, et mixtures de ces derniers.

10. Un boîtier de batterie de n'importe lesquelles des revendications précédentes, où l'agent de renforcement est sélectionné dans le groupe constitué de : fibres de verre, mica, oxyde de titane et mixtures de ces derniers.

11. Un boîtier de batterie de la revendication 1, où le polymère de base comporte de l'oxyde de polyphénylène, du polypropylène, et de 0 à 60 % poids de fibre de verre.

12. Un boîtier de batterie de la revendication 1, où le polymère de base comporte de l'oxyde de polyphénylène, du polypropylène, et de 20 à 45 % poids de fibre de verre.

13. Un boîtier de batterie de la revendication 1, où la composition polymérique ignifugeante comporte de 10 à 50 % poids de l'additif résistant au feu.

14. Un boîtier de batterie de n'importe lesquelles des revendications précédentes, où l'additif résistant au feu comprend un graphite intercalaire.

15. Un boîtier de batterie de n'importe lesquelles des revendications précédentes, comportant de plus au moins un composant structurel interne (22) dans le compartiment intérieur (18) qui est fait à partir de la composition polymérique ignifugeante.

16. Un boîtier de batterie de n'importe laquelle des revendications précédentes, où au moins un élément parmi les portions de couverture (20) et la portion de base (12) comprend une pluralité de trous d'aération (24) à travers lesquels les gaz émis peuvent s'échapper.

17. Un boîtier de batterie de n'importe lesquelles des revendications précédentes, où le polymère de base comporte de 20 à 45 % poids de fibre de verre.

18. Un boîtier de batterie de n'importe lesquelles des revendications précédentes, comportant de plus au moins un composant structurel interne (22) dans le compartiment intérieur (18) qui est fait à partir de la composition polymérique ignifugeante.

19. Un boîtier de batterie de n'importe lesquelles des revendications précédentes, où l'additif résistant au feu comporte, sur la base d'une mixture mélangée de 100 parties en poids :
de 20 à 45 parties d'un liant polymérique comportant un polyéthylène de haute densité ayant une densité allant de 0,940 à 0,970 g/cm³ et un copolymère contenant une α-oléfine ayant une densité allant de 0,870 à 0,910 g/cm³, où de 20 à 45 parties de la mixture mélangée est le polyéthylène de haute densité et de 0 à 15 partie(s) de la mixture mélangée est le copolymère contenant une α-oléfine ;
de 15 à 25 parties d'un agent générateur de gaz azoté sélectionné dans le groupe constitué d'un sel d'ammonium, d'un sel de mélamine, ou de mixtures de ces derniers, où les sels sont sélectionnés dans le groupe constitué de phosphates, de phosphonates, de phosphinates, de borates, de cyanurates, de sulfates et de mixtures de ces derniers ; de 20 à 30 parties d'un agent générateur de vapeur d'eau sélectionné dans le groupe constitué de magnésie hydratée, d'alumine hydratée, de graphite intercalaire, et de mixtures de ces derniers ;
de 1 à 5 partie(s) d'un antioxydant sélectionné dans le groupe constitué de thiodipropionate de distéaryle, d'un phénol encombré, et de mixtures de ces derniers ;
et de 3 à 10 parties d'un agent de renforcement sélectionné dans le groupe constitué de fibres de verre, de mica, d'oxyde de titane et de mixtures de ces derniers,
où l'additif est dépourvu d'halogène.
